# EUROPÄISCHE PATENTSCHRIFT

(11) **EP 2 646 837 B1**
(45) Veröffentlichungstag und Bekanntmachung des Hinweises auf die Patenterteilung: **08.07.2015**
(21) Anmeldenummer: 11767769.0
(22) Anmeldetag: 07.09.2011
(51) Int. Cl.: G01P 13/00, G01P 15/08

(54) **SENSORMODUL MIT WECKEINRICHTUNG**
SENSOR MODULE WITH WAKING DEVICE
MODULE CAPTEUR COMPRENANT UN DISPOSITIF RÉVEIL

(30) Priorität: 30.11.2010 DE 102010060906
(43) Veröffentlichungstag der Anmeldung: 09.10.2013
(73) Patentinhaber: Fraunhofer-Gesellschaft zur Förderung der angewandten Forschung e.V., 80686 München (DE)
(72) Erfinder: BILLEP, Detlef, 09224 Chemnitz (DE); SCHULZE, Robert, 09112 Chemnitz (DE); GESSNER, Thomas, 09113 Chemnitz (DE)
(74) Vertreter: Steiniger, Carmen
(86) Internationale Anmeldenummer: PCT/IB2011/053913
(87) Internationale Veröffentlichungsnummer: WO 2012/073127

(56) Entgegenhaltungen:
- WO-A2-2010/135379
- JP-A- 10 177 032
- US-A- 5 585 566
- US-A1- 2003 196 490

## Beschreibung

Die Erfindung betrifft ein Mikromechanik-basiertes Sensormodul mit wenigstens einer bewegbaren Struktur, wenigstens einem aktiven Primärwandler zum Umwandeln eines mechanischen Signals der bewegbaren Struktur in ein elektrisches Signal und einer elektronischen Schaltung zum messtechnischen Erfassen von Bewegungen der bewegbaren Struktur, wobei das Sensormodul neben dem aktiven Primärwandler wenigstens einen passiven Sekundärwandler zum Umwandeln eines mechanischen Signals der bewegbaren Struktur in ein elektrisches Signal aufweist, wobei der Primärwandler und der Sekundärwandler mit der elektronischen Schaltung gekoppelt sind, und wobei der Sekundärwandler als Aufweckgenerator für den Primärwandler und/oder die elektronische Schaltung von einem Ruhezustand in einen Messzustand vorgesehen ist.

Als auf Mikromechanik basierende Sensormodule der genannten Gattung kommen beispielsweise kapazitive Beschleunigungssensoren zur präzisen Messung von linearen Beschleunigungen oder von Winkelbeschleunigungen zum Einsatz. Einsatzgebiete solcher Sensoren sind beispielsweise ABS-Systeme im Automobilbau, Navigationssysteme, die den Ausfall von GPS-Signalen überbrücken können, oder auch Bildstabilisierungssysteme in Kameras. In Navigationssystemen eingesetzte Beschleunigungssensoren werden auch als Inertialsensoren bezeichnet. Für eine vollständige Erfassung der Bewegung im dreidimensionalen Raum müssen von dem Intertialsensor drei lineare Beschleunigungen in drei Raumrichtungen und die entsprechenden Winkelbeschleunigungen in den drei Raumrichtungen erfasst werden. Der Sensor muss folglich sechs Freiheitsgrade erfassen. Um in solchen Sensoren die benötigte Genauigkeit zu erreichen, werden mechanisch bewegbare Strukturen in Schwingungen versetzt und die Lage der schwingenden Körper wird mit einer hohen Samplingrate erfasst. Ein Sensoraufbau mit mehreren auf einem Substrat angeordneten Inertialsensoren zur Erfassung verschiedener Freiheitsgrade ist beispielsweise in der Druckschrift US 2003/0196490 A1 beschrieben.

Zur Erzeugung von Schwingungen und für die häufige Datenabfrage benötigen solche Sensoren eine bestimmte Versorgungsleistung, die beispielsweise beim Batteriebetrieb solcher Sensoren zu einer schnellen Entladung der Batterien führt. Schaltet man Initialsensoren vollständig ab, können sie keine Messgröße erfassen und können bei Eintritt eines Ereignisses, wie einer Änderung einer inertialen Größe, nicht reagieren. Um einen kapazitiven Sensor im Überwachungsmodus bzw. in Betriebsbereitschaft zu betreiben, müssen immer große Teile des Systems, wie die Front-End-Elektronik, A/D-Wandler und die control logic, aktiv bleiben.

Ein kapazitiver Sensor zur Messung von Winkelgeschwindigkeiten ist beispielsweise in der Druckschrift EP 0 911 606 A1 beschrieben. Eine bekannte Möglichkeit, den Stromverbrauch solcher Sensoren zu senken, ist die Herabsetzung der Samplingfrequenz bzw. der Abfragedatenrate in Zeiten, in denen der Sensor nicht bewegt wird. Durch ein zyklisches Messen mit langen Pausen wird hierbei, um Energie zu sparen, die Abfragedatenraten der Sensoren verringert. Diese Methode zur Senkung des Leistungsverbrauchs ist jedoch mit dem Nachteil behaftet, dass der Sensor bei reduzierter Leistung keine kontinuierliche Messung ausführt und dass dadurch sporadisch auftretende Beschleunigungen von dem Sensor mitunter nicht erfasst und somit übersehen werden. Insbesondere können kurze Signale, wie Schocksignale, Vibrationssignale oder impulsartige Signale, nicht erfasst werden. Des Weiteren weist ein solcher Sensor auch in seinem Stromspar-Zustand noch einen zu hohen Stromverbrauch auf. Bei den bekannten Sensoren können angegebene minimale Stromaufnahmen, wie beispielsweise von 10 µA, nie erreicht werden, wenn man technisch relevante Signale erkennen möchte. Der Energiebedarf der Sensoren im Stand-by-Modus ist jedoch für den Einsatz in autarken und/oder mobilen Geräten bedeutsam, da Batterien bzw. Akkumulatoren äußerst effizient genutzt werden müssen, um sinnvolle Lebenszeiten der Systeme zu erreichen.

Es sind auch passive Beschleunigungssensoren bekannt, bei denen eine Beschleunigung über eine Auslenkung einer seismischen Masse dadurch gemessen wird, dass an der Aufhängungsfeder für die seismische Masse eine piezoelektrische Schicht angebracht wird, die bei einer Verbiegung der Feder eine Spannung an zwei Anschlusselektroden aufweist. Diese Spannung kann mit einer stromsparenden Verstärkerschaltung zu einem Sensorausgangssignal aufbereitet werden. Ein solcher Sensor ist beispielsweise in der Druckschrift DE 10 2005 006 666 A1 beschrieben. Derartige Sensoren zeichnen sich durch einen verschwindend kleinen Stromverbrauch aus, allerdings ist die Messgenauigkeit solcher Sensoren auch viel geringer als die von kapazitiven Beschleunigungssensoren. Diese Sensoren sind daher beispielsweise nicht als Inertialsensoren in Navigationssystemen brauchbar.

Ferner sind aus dem Stand der Technik elektronische Schaltungen bekannt, auf welchen verschiedene Sensoren zum Einsatz kommen und bei welchen passive Schaltungskomponenten dazu verwendet werden, andere Schaltungskomponenten mit einem höheren Strombedarf, wie beispielsweise integrierte Beschleunigungssensoren und Funkübertragungsschnittstellen, nur dann zu aktivieren, wenn ein passiver Sensor den Bedarf der Zuschaltung der leistungsverbrauchenden Komponente zuvor initiiert hat. Derartige Schaltungen sind aus verschiedenen Komponenten zusammengebaute Geräte, ihre Herstellung ist entsprechend aufwändig und teuer. Darüber hinaus existieren feinwerktechnische Lösungen für das Einschalten elektronischer Schaltungen als Folge einer Bewegung.

In der Druckschrift WO 2010/135379 A2 werden piezoelektrische Dehnungsmessstreifen als Energiegewinnungseinheiten verwendet, die bei Überschreitung eines Belastungsniveaus einen Mikroprozessor von einem Schlaf- in einem Wachmodus versetzen, woraufhin durch den Mikroprozessor einer Schaltung die Leistung zur Verfügung gestellt wird, die benötigt wird, damit ein resistiver Dehnungssensor dauerhaft arbeiten kann.

Die Druckschrift JP 10177032 A beschreibt seismographische Sensoren mit piezoelektrischen Elektroden, bei welchen die Auswerteelektronik für alle bis auf eine Elektrode abgeschaltet werden kann. Die eine, nicht abgeschaltete Elektrode wird dauerhaft mit Leistung versorgt und dient als Aufweckelektrode für die weiteren Elektroden.

In der Druckschrift US 5,585,566 A wird zum Aufwecken einer Leistungsversorgungsschaltung für einen Beschleunigungssensor eine piezoelektrische Folie eingesetzt.

Die Problemstellung der vorliegenden Erfindung liegt somit im Bereich der energieoptimierten Nutzung von Inertialsensoren. Es ist dabei die Aufgabe der vorliegenden Erfindung, ein integriertes Mikromechanik-basiertes Sensormodul mit einer hohen Messgenauigkeit vorzuschlagen, welches im Dauereinsatz einen geringen Energieverbrauch aufweist und das auch sporadisch auftretende Beschleunigungen einer bewegbaren Struktur in dem Sensormodul messtechnisch mit hoher Genauigkeit erfasst. Die Aufgabe wird erfindungsgemäß durch ein Sensormodul der eingangs genannten Gattung gelöst, in welchem der Sekundärwandler in die bewegte Struktur und/oder in eine weitere bewegbare Struktur in der elektronischen Schaltung integriert ist. Es wird somit gemäß der vorliegenden Erfindung vorgeschlagen, in einem erfindungsgemäßen Sensormodul mit einem mikromechanischen Sensor, der auf einem aktiven Primärwandler mit hoher Messgenauigkeit mit einem relativ hohen Stromverbrauch basiert, zusätzlich einen als Aufweckgenerator fungierenden Sekundärwandler zu integrieren.

Durch die Integration in ein einziges mikromechanisches Bauelement können Platz und Kosten gespart werden. Außerdem wird die Zuverlässigkeit des Sensormoduls als Ganzes erhöht. Durch die Integration von zwei völlig verschiedenen Signalwandlern in einem einzigen integrierten Sensor wird dabei ein völlig neuer Typ von Sensormodul kreiert.

Der integrierte Sekundärwandler ist ein passiver Signalwandler, der ohne elektrische Energieversorgung selbstständig ein Signal erzeugen kann. Beispielsweise kann als Sekundärwandler ein piezoelektrischer Signalwandler genutzt werden, der in Folge eines mechanischen Signals ein Spannungssignal erzeugt. Der passive Signalwandler ist, da er keine Versorgungsspannung benötigt, jederzeit einsatzbereit und sein Einsatz ermöglicht eine kontinuierliche Überwachung des interessierenden mechanischen Signals.

Das Signal des passiven Signalwandlers wird wegen seiner geringeren Messgenauigkeit nicht direkt als Messignal verwendet, sondern nur dafür, den aktiven Signalwandler, der sich durch eine hohe Messgenauigkeit auszeichnet, aus einem Ruhezustand in einen Messzustand zu versetzen. In dem Ruhezustand sind der Primärwandler und/oder die elektronische Schaltung im Wesentlichen deaktiviert. In der elektronischen Scaltung bleibt nur eine stromsparende Erkennung für das Aufwecksignal aktiviert. Das Aufwecken des Primärwandlers und/oder der elektronischen Schaltung ist in sehr kurzer Zeit, beispielsweise innerhalb weniger Millisekunden, möglich. Bei Bedarf können sogar Aufweckzeiten im Bereich von Mikrosekunden realisiert werden. Je nach Konzeption des Sensormoduls ist es möglich, dass nur ein Teil des Sensormoduls energiesparend ausgelegt werden muss, beispielsweise weil er über eine Batterie versorgt wird, und der andere Teil permanent aktiviert ist, beispielsweise weil der andere Teil ein Mikrocontroller ist, der auch andere Aufgaben als die Überwachung des Primärwandlers bearbeitet. In diesem Fall ist der Sekundärwandler nur zum Aufwecken des Teils zuständig, für den ein Energie sparender Ruhezustand vorgesehen ist.

Der konkrete Ort der Integration des Sekundärwandlers ist in einer Variante des erfindungsgemäßen Sensormoduls die bewegbare Struktur, deren Bewegung auch von dem aktiven Primärwandler detektiert wird. In dieser Variante sind Primärwandler und Sekundärwandler in einem einzigen Bauelement integriert und bilden eine Sensoreinheit aus.

In einer anderen Variante des erfindungsgemäßen Sensormoduls ist zur Integration des Sekundärwandlers eine weitere bewegbare Struktur innerhalb der elektronischen Schaltung ausgebildet. Dabei kann die weitere bewegbare Struktur beispielsweise neben der bewegbaren Struktur angeordnet sein. In einer weiteren Ausbildung eines erfindungsgemäßen Sensormoduls erstreckt sich der Sekundärwandler sowohl über die bewegbare Struktur als auch über eine weitere bewegbare Struktur in der elektronischen Schaltung. Somit wird erfindungsgemäß ein Sensorsystem geschaffen, welches einen primären, beispielsweise kapazitiven, Wandler und einen sekundären Wandler für eine Überwachungsfunktion um einen Ruhemodus enthält. Wie oben ausgeführt, übernimmt der Sekundärwandler die Aufgabe, im passiven, stromsparenden Modus auf ein zu messendes Ereignis zu warten. Die messtechnischen Anforderungen sind dabei gering, wobei das Wandlerprinzip möglichst wenig Energie verbrauchen soll. Deshalb eignen sich für den Sekundärwandler Effekte, die ohne Hilfsenergie aufkommen. Da durch den Sekundärwandler mechanische Energie in elektrische Energie umgewandelt werden kann, ohne dafür Hilfsenergie zu benötigen, kann für den Sekundärwandler auch der Begriff Generator, wie zum Beispiel Wake-up-Generator, verwendet werden.

Die Anforderungen an Linearität, Auflösung, Temperaturverhalten usw. an den Sekundärwandler sind in der erfindungsgemäßen Lösung sehr gering. Der Sekundärwandler muss lediglich in der Lage sein, einen Schwellwert zu erfassen, um in den aktiven Modus schalten zu können. Wird beim Eintreten eines Ereignisses, wie zum Beispiel dem Messen einer beschleunigten Bewegung in Abhängigkeit von einem Schwellwert, der Primärwandler aktiviert, übernimmt dieser die Messaufgabe mit hoher Messgenauigkeit, Dynamik, Temperaturstabilität usw. entsprechend der geforderten bzw. in einem Datenblatt angegebenen Spezifikation.

Die eigentliche Messaufgabe übernimmt der erfindungsgemäß vorgesehene präzise Primärwandler. Dieser kann, wie oben ebenfalls bereits ausgeführt, in einen energiesparenden Ruhemodus, wie einen Power-down-Modus, versetzt werden, wenn er zeitlich begrenzt keine Messaufgabe erfüllen muss. Der Sekundärsensor übernimmt in dieser Zeit die Aufgabe, das Eintreten eines zu messenden Ereignisses zu überwachen. In diesem Modus wird nahezu die gesamte Steuereinheit, wie beispielsweise ein Mikrocontroller, und der Primärwandler selbst abgeschaltet. Die Stromaufnahme des Gesamtsystems ist damit sehr klein. Um den Primärwandler wieder aufzuwecken, wird der Sekundärwandler benötigt. Dieser hat die Aufgabe, auf Ereignisse der Umgebung zu reagieren.

Die erfindungsgemäß vorgeschlagene Kombination von Primär- und Sekundärwandler in einem Mikromechanik-basierten Sensormodul weist gegenüber bestehenden Systemen eine herausragende Energieeffizienz auf. Stand-by-Modi, wie der im Stand der Technik beschriebene Sleep-to-wake-Modus, werden gänzlich überflüssig. In dem erfindungsgemäßen Sensormodul ist die Energieaufnahme im Ruhemodus auf die Leckströme der angeschlossenen elektronischen Schaltung begrenzt. Weitere Vorteile entstehen durch die kompakte Realisierbarkeit auf einem Chip bzw. in einer kombinierten Funktionsstruktur. Die erfindungsgemäß verbundenen verschiedenen Wandlermechanismen können entsprechend auf die gewünschten Funktionalitäten abgestimmt werden. Ferner eröffnet das erfindungsgemäße Sensormodul die Möglichkeit, Sensorsysteme in ihrer Energieeffizienz zu verbessern, ohne deren Messgenauigkeit zu beeinflussen. Zudem begünstigt das erfindungsgemäße Sensormodul die technologische Massenfertigung, wodurch die neue Funktionalität mit begrenztem Mehraufwand implementierbar ist.

Die Funktionalität des erfindungsgemäß verwendeten Primärwandlers ist das exakte Messen einer auftretenden Beschleunigung, wie beispielweise einer linearen Beschleunigung, einer Neigung, einer Vibration oder von Schock. Dabei wird gemäß einer typischen Ausbildung des erfindungsgemäßen Sensormoduls als Primärwandler ein kapazitiver oder ein piezoresistiver Wandler eingesetzt. Kapazitive Wandler weisen eine feste Elektrode und eine zweite Elektrode an der bewegbaren Struktur auf. Durch die Bewegung der bewegbaren Struktur wird der Abstand und/oder die Überdeckung der Elektroden und somit die Kapazität zwischen den Elektroden variiert. Ein kapazitiver Wandler ist ein besonders einfacher Wandler, zu dessen Herstellung eine Vielzahl von Materialien einsetzbar ist und der beispielsweise bei einer Ausbildung als Kammkondensator gut an die konkret gestellten Aufgaben anpassbar ist.

Die Ausbildung des aktiven Primärwandlers ist jedoch nicht auf kapazitive Wandler beschränkt. Es können auch andere Wandler, die eine Bewegung in eine andere physikalische Größe umwandeln, zum Einsatz kommen. Vorzugsweise wird das mechanische Signal in eine elektrische Größe umgewandelt, wobei neben Kapazitäten auch andere Wandler wie piezoresistive Wandler gebräuchlich sind, bei denen eine Deformation eines Wandlerkörpers oder einer Wandlerschicht zu einer Änderung des elektrischen Widerstandes und in der Folge zu einer Änderung des Auswertestromes führt. Es sind aber auch andere Sensormodule möglich, bei denen eine andere Art der Auswertung, beispielsweise eine optische Auswertung erfolgt.

Der Primärwandler muss für die Erfüllung seiner Messaufgabe mit Hilfsenergie versorgt werden. Das Signal des Primärwandlers wird mithilfe einer elektronischen Schaltung ausgewertet. Üblicherweise besteht die elektronische Schaltung aus einem analogen Front-End, einer A/D-Wandlung und einer digitalen Signalverarbeitung. Wenn der Primärwandler bzw. Primärsensor keine Messaufgabe erfüllt, wird dieser durch die digitale Logik, wie beispielsweise einen Mikrocontroller, in einen Energiesparmodus versetzt. Mikrocontroller kennen verschiedene Stromsparmodi. Der Modus mit dem geringsten Energieverbrauch ist der sogenannte Power-down-Modus. Dabei werden alle Oszillatoren gestoppt, die Schaltung wird heruntergefahren. In diesem Fall kann von dem erfindungsgemäßen Sensormodul keine Messaufgabe erfüllt werden, da der Primärwandler, wie beispielweise ein Beschleunigungssensor, ebenfalls nicht mit Energie versorgt wird. Mithilfe des Sekundärwandlers wird jedoch erreicht, dass das erfindungsgemäße Sensormodul dennoch auf äußere Ereignisse, wie beispielsweise Bewegungen, reagiert und in geeigneter Weise Signale detektiert.

In einer bevorzugten Ausführungsform des erfindungsgemäßen Sensormoduls ist der Sekundärwandler ein piezoelektrischer Wandler. Bei der Deformation eines piezoelektrischen Festkörpers entsteht an dessen Oberflächen eine elektrische Spannung. Spannungen sind elektronisch besonders einfach detektier- und handhabbar. Des Weiteren wird die Herstellung piezoelektrischer Schichten technisch beherrscht, sodass zuverlässige piezoelektrische Wandler kostengünstig hergestellt werden können. Es sind auch viele piezoelektrische Sensoren im Stand der Technik bekannt, sodass ein großer Erfahrungsschatz bei der Ausbildung piezoelektrischer Wandler vorhanden ist. Beispielsweise eignet sich erfindungsgemäß als Sekundärwandler die Verwendung wenigstens eines piezoelektrischen Biegebalkens.

Vorzugsweise wird der erfindungsgemäß vorgesehene Sekundärwandler so ausgelegt, dass er Signale unabhängig von ihrer Wirkungsrichtung erfasst. Ein piezoelektrischer Sekundärwandler benötigt im Gegensatz zum Primärwandler im Betrieb keine zusätzliche Hilfsenergie. Grund dafür ist die direkte Kopplung von elektrischen und mechanischen Größen via piezoelektrischen Effekt. Die mechanische Energie wird direkt in elektrische Energie umgewandelt. Somit ist bei Verwendung eines piezoelektrischen Sekundärwandlers eine Schaltung notwendig, die ihr Potenzial ändert, falls an deren Eingang eine bestimmte Ladungsmenge anliegt. Dies kann erfindungsgemäß beispielsweise mithilfe einer Komparatorschaltung erfolgen. Diese Schaltung benötigt Energie. Die Höhe der benötigten Energie wird durch den Ruhestrom der verwendeten Transistoren bestimmt. Dieser ist wiederum abhängig von Leckströmen.

In einer alternativen Ausbildung des erfindungsgemäßen Sensormoduls ist der Sekundärwandler ein induktiver Wandler oder ein auf einem Elektret basierender elektromechanischer Wandler. Ein Elektret ist ein elektrischer Isolator, in dem getrennte elektrische Ladungen ortsfest eingeschlossen sind. Ein Elektret ist somit die elektrische Entsprechung eines Permanentmagneten und ein Elektret hat im Wesentlichen ähnliche Eigenschaften wie ein piezoelektrischer Wandler. Die Herstellung von Elektreten ist jedoch technologisch anspruchsvoller als die Herstellung von piezoelektrischen Schichten. Eine andere Alternative zur Ausbildung eines passiven Wandlers ist der Einsatz eines magnetisch aktiven Elementes. Ein solches magnetisch aktives Element ist beispielsweise eine Spule, in der bei einer Bewegung in einem inhomogenen permanenten Magnetfeld eine Spannung induziert wird. Neben den aufgezählten Sekundärwandlern sind erfindungsgemäß auch andere Sekundärwandler, beispielsweise optische Sekundärwandler, die bei Bewegung von einer vorhandenen Lichtquelle beleuchtet werden und ein elektrisches Signal ausgeben, einsetzbar.

In einer Weiterbildung des erfindungsgemäßen Sensormoduls umfasst die bewegbare Struktur wenigstens eine an wenigstens einer Feder aufgehängte seismische Masse und der wenigstens eine Sekundärwandler ist an wenigstens einer der Federn angeordnet. In dieser Ausbildung des erfindungsgemäßen Sensormoduls ist der Sekundärwandler also an der bewegbaren Struktur angeordnet, an welcher auch der aktive Primärwandler angeordnet ist. Konkret weist die bewegbare Struktur eine seismische Masse auf, die an einer oder an mehreren Federn aufgehängt ist und der Sekundärwandler ist an einer oder an mehreren dieser Federn angeordnet. In diesem Ausführungsbeispiel ist der Sekundärwandler an der generell vorhandenen bewegbaren Struktur vorgesehen. Für die Ausbildung des erfindungsgemäßen Sensormoduls durch die Ergänzung eines Sekundärwandlers ist in diesem Fall also keine zusätzliche bewegbare Struktur erforderlich. Daher zeichnet sich dieses Sensormodul, gemessen an der erweiterten Funktionalität, durch einen besonders einfachen Aufbau aus.

Gemäß einer günstigen Ausgestaltung des erfindungsgemäßen Sensormoduls ist die weitere bewegbare Struktur in einer Verdrahtungsebene der integrierten elektronischen Schaltung ausgebildet. In integrierten mikroelektronischen Schaltungen sind die Transistoren in der Regel in einem Halbleitersubstrat ausgebildet und die Verschaltung der Transistoren untereinander und zu externen Anschlüssen erfolgt über mehrere Verdrahtungsebenen, die auf dem Halbleitersubstrat hergestellt werden. Im Zuge der zunehmenden Leistungsfähigkeit der elektronischen Schaltungen bestehen auch ständig zunehmende Ansprüche an die Technologie der Verdrahtungsebenen. Trotz sinkender Strukturgrößen müssen parasitäre Kapazitäten zwischen benachbarten Leitungen klein gehalten werden. Zur Realisierung kleiner parasitärer Kapazitäten werden von den Isolatoren zwischen benachbarten Leitungen möglichst kleine dielektrische Konstanten gewünscht.

Eine ideale Isolation zwischen zwei Leitungen wird erreicht, wenn zwei Leitungen durch Vakuum bzw. gut isolierende Luft isoliert sind. Entsprechend wurden Verdrahtungsstrukturen entwickelt, in denen luftisolierte elektrische Leitungen zum Einsatz kommen. In einer weiteren vorgeschlagenen Ausbildung des erfindungsgemäßen Sensormoduls wird daher eine Herstellungstechnologie für luftisolierte Leitungen genutzt, um die wenigstens eine bewegbare Struktur auszubilden. Insbesondere kann auf diese Weise besonders vorteilhaft die weitere bewegbare Struktur ausgebildet werden, an welcher der Sekundärwandler vorgesehen ist. Hierdurch kann der Sekundärwandler mit besonders kurzen Leitungswegen optimal in die elektronische Schaltung eingebunden werden. Wenn die bewegbare Struktur in der elektronischen Schaltung ausgebildet ist, ist in dem erfindungsgemäßen Sensormodul vorzugsweise also wenigstens eine der bewegbaren Strukturen eine luftisolierte Mikrostruktur. In der Verdrahtungsebene sind jedoch auch andere, beispielsweise durch elastische Polymere isolierte bewegbare Strukturen, realisierbar.

In einem bevorzugten Beispiel des erfindungsgemäßen Sensormoduls liegt der Stromverbrauch im Ruhezustand des Primärwandlers und/oder der elektronischen Schaltung unter 1 µA. Entsprechend niedrig ist der Energieverbrauch der elektronischen Schaltung beim Einsatz einer Batterie. Mit 3 V Versorgungsspannung liegt der Leistungsbedarf des Sensormoduls entsprechend unter 3 µW. Der Leistungsbedarf von Sensoren aus dem Stand der Technik, beispielsweise der in der Einleitung zitierten Sensoren, liegt über 10 µA und damit eine Größenordnung über dem Stromverbrauch des erfindungsgemäßen Sensormoduls. Der reduzierte Energieverbrauch führt zu vorteilhaften Eigenschaften des erfindungsgemäßen Sensormoduls, beispielsweise zu einer um eine Größenordnung von 1 Jahr auf 10 Jahre verlängerten Batterielebensdauer.

In einer günstigen Variante des erfindungsgemäßen Sensormoduls weist das Sensormodul mehrere Teilsensoren für jeweils unterschiedliche Freiheitsgrade auf, wobei das Sensormodul mehrere Sekundärsensoren aufweist, die den unterschiedlichen Freiheitsgraden zugeordnet sind. Je nach Einsatzaufgabe des erfindungsgemäßen Sensormoduls werden Messwerte von einem oder mehreren Parametern benötigt. Zur Erfassung der Bewegung im dreidimensionalen Raum sind beispielsweise sechs Parameter zu bestimmen, die lineare Beschleunigungen in drei Raumrichtungen und Winkelbeschleunigungen und die drei Raumrichtungsvektoren beinhalten. Zur Erfassung jedes Parameters ist in der Regel ein Sensor erforderlich, der auch als Teilsensor ausgebildet sein kann, wobei dann mehrere Teilsensoren zu einem Gesamtsensor zusammengefasst sein können. Wenn ein Sensormodul mehrere Teilsensoren aufweist, genügt es bei manchen Anwendungsfällen, einen Sekundärsensor vorzusehen, der als Aufweckgenerator für das gesamte Sensormodul fungiert. In anderen Anwendungsfällen kann ein einziger Sekundärsensor den Aufweckbedarf nicht hinreichend sicher feststellen. In diesen Fällen werden mehrere Sekundärsensoren für verschiedene Freiheitsgrade vorgesehen.

In bevorzugten Anwendungsbeispielen von erfindungsgemäßen Sensormodulen ist das Sensormodul ein Inertialsensormodul oder ein Drucksensormodul. Inertialsensormodule dienen der Erfassung von Bewegungen, beispielsweise in Navigationssystemen oder in Maschinenüberwachungen. Inertialsensormodule sind jedoch nur ein Anwendungsbeispiel für erfindungsgemäße Sensormodule. In anderen Anwendungsbeispielen können die erfindungsgemäßen Sensormodule auch Drucksensormodule oder sonstige Sensormodule sein.

In einer häufigen Ausbildung erfindungsgemäßer Sensormodule weist die elektronische Schaltung einen Schwellwertschalter und einen Mikrocontroller auf, wobei der Leistungsbedarf des Mikrocontrollers in dem Messzustand des Primärwandlers und/oder der elektronischen Schaltung mehrfach größer als in dem Ruhezustand ist, wobei der Schwellwertschalter in dem Ruhezustand zur Überwachung eines Ausgangssignals des Sekundärsensors vorgesehen ist und wobei der Schwellwertschalter zum Aufwecken des Mikrocontrollers aus dem Ruhezustand per Interuptsignal vorgesehen ist. Der passive Sekundärwandler wird nicht als Messgerät genutzt, sondern nur als Initiator für die Aktivierung des aktiven Primärwandlers. Zur Bewertung des Signals des Sekundärwandlers ist deshalb nur ein Komparator erforderlich, der bewertet, ob das elektronische Signal des Sekundärwandlers größer als ein festgelegter Schwellwert ist, der definiert, dass eine interessierende mechanische Bewegung vorhanden ist. Dieses relevante elektrische Signal an dem passiven Sekundärwandler führt dann zu einem digitalen Schalten des Schwellwertschalters, welches ein Umschalten des Sensormodulzustandes von dem Ruhezustand in den Messzustand bewirkt. Häufig weist das Sensormodul zudem einen Mikrocontroller auf, der im Messzustand im Vergleich zum Ruhezustand einen erhöhten Leistungsbedarf hat. Dieser Mikrocontroller wird dann per Interruptsignal aus seinem Ruhezustand aufgeweckt, sodass das Sensormodul seine Messaufgabe mit Hilfe von Primärwandler und Mikrocontroller wahrnehmen kann.

Gemäß einer vorteilhaften Weiterbildung des erfindungsgemäßen Sensormoduls weist die elektronische Schaltung wenigstens eine Schaltungskomponente auf, durch welche in dem Sekundärwandler erzeugte Elektroenergie zumindest zeitweise als Energieversorgungskomponente des Sensormoduls nutzbar ist. Der Sekundärwandler erzeugt nicht nur logische Signale, sondern in dem Sekundärwandler wird eine Bewegung des Sensormoduls, die zu einer Einkopplung mechanischer Energie in die bewegbare Struktur führt, in Elektroenergie umgewandelt. Diese Energie kann durch eine Schaltungskomponente, beispielsweise eine Gleichrichterschaltung, einer Energieversorgungskomponente des Sensormoduls zugeführt werden. Die Energieversorgungskomponente kann beispielsweise ein Akkumulator sein, der im Messzustand der elektronischen Schaltung von dem Sekundärwandler nachgeladen wird. Die Energieversorgungkomponente kann aber auch ein anderer Energiespeicher sein, der für die Leistungsversorgung des Sensormoduls ohne Batterie oder Akkumulator zuständig ist.

Bevorzugte Ausführungsformen der vorliegenden Erfindung, deren Aufbau, Funktion und Vorteile, sollen im Folgenden anhand von Figuren näher erläutert werden, wobei
- Figur 1: schematisch ein Blockschaltbild einer Ausführungsform eines erfindungsgemäßen Sensormoduls zeigt;
- Figur 2: schematisch eine Draufsicht auf eine bevorzugte Sensoreinheit einer Ausführungsform eines erfindungsgemäßen Sensormoduls zeigt;
- Figur 3: schematisch eine Draufsicht auf eine alternative Sensoreinheit einer weiteren Ausführungsform eines erfindungsgemäßen Sensormoduls zeigt; und
- Figur 4: schematisch eine mögliche Ausführungsvariante eines Sekundärwandlers einer Ausführungsform eines erfindungsgemäßen Sensormoduls in einer perspektivischen Ansicht zeigt.

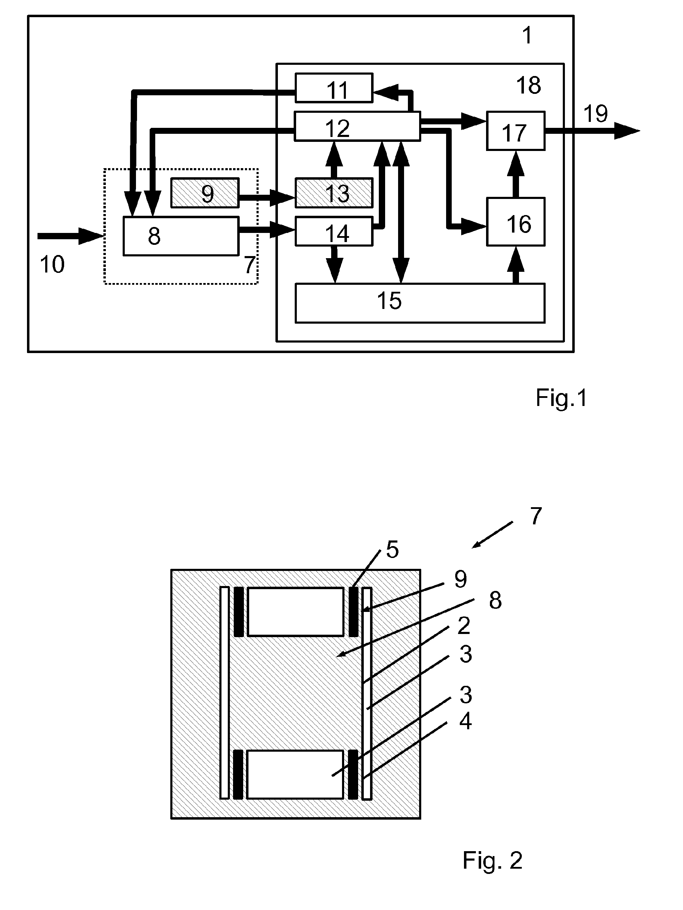

In Figur 1 ist ein erfindungsgemäßes Sensormodul 1 in einem Blockschaltbild schematisch dargestellt. Das Sensormodul 1 weist eine Sensoreinheit 7 und eine elektronische Schaltung 18 auf. In der hier dargestellten Ausbildung ist das Sensormodul 1 eine Leiterplatte, auf der verschiedene Komponenten angeordnet und miteinander verbunden sind. Zur Erhöhung der Übersichtlichkeit sind in Figur 1 nur Komponenten dargestellt, die zur Erläuterung der Erfindung wesentlich sind. In einer anderen, hier nicht dargestellten Ausbildung kann das Sensormodul 1 als integrierter Chip ausgebildet sein, wodurch eine kostengünstige Massenfertigung des Sensormoduls 1 möglich wird.

In dem erfindungsgemäßen Sensormodul 1 weist die Sensoreinheit 7 einen Primärsensor bzw. Primärwandler 8 und zusätzlich einen Sekundärsensor bzw. Sekundärwandler 9 auf. Die Sensoreinheit 7 ist dafür vorgesehen, ein Bewegungseingangssignal 10 zu detektieren und in ein elektrisches Ausgangssignal 19 umzuwandeln. In dem vorliegenden Ausführungsbeispiel ist der Primärwandler 8 ein kapazitiver Drehratesensor, dessen Kapazität über einen Analog-Digital-Wandler 14 ermittelt und mittels einer Signalvorverarbeitung 15 und einem Mikrocontroller 12 aufbereitet wird. Über einen Digital-AnalogWandler 11 wird in dem Primärwandler 8 eine bewegbare Struktur zu Schwingungen angeregt. Des Weiteren weist das Sensormodul 1 einen Datenspeicher 16 zum Speichern eines Programmcodes und von gemessenen Daten und ein Funkmodul 17 auf, welches gemessene Daten als Ausgangssignal 19 ausgeben kann.

Der Sekundärwandler 9 ist in dem vorliegenden Ausführungsbeispiel ein piezoelektrischer Sensor, bei dem bei einem vorhandenen Bewegungseingangssignal eine Ausgangsspannung generiert wird. Diese Spannung wird nicht gemessen, sondern nur mit Hilfe des Schwellwertschalters 13 bewertet. Beim Überschreiten eines in dem Schwellwertschalter 13 festgelegten Grenzwertes erzeugt der Schwellwertschalter 13 ein Signal, das an den Mikrocontroller 12 weitergeleitet wird.

Das Sensormodul 1 hat in einem Messzustand eine Funktionalität, in welcher der Primärwandler 8 zum Messen verwendet wird und in dem die wesentlichen Komponenten der elektronischen Schaltung 18 in Betrieb sind. In dem Messzustand hat das Sensormodul 1 einen so großen Stromverbrauch, dass die nicht dargestellte Stromversorgung, die beispielsweise in Form einer Batterie realisiert wird, schneller entladen wird, als dies gewünscht ist. Zur Reduzierung des Stromverbrauchs des Sensormoduls 1 kann sich dieses selbst in einen Ruhezustand versetzen, was insbesondere dann vorgesehen ist, wenn kein Bewegungs-/Eingangssignal 10 anliegt und das Sensormodul 1 bzw. Teile davon nicht bewegt werden. In dem Ruhezustand ist nur der Schwellwertschalter 13 aktiv, der sich durch einen sehr geringen Energieverbrauch auszeichnet.

Der Sekundärwandler 9 ist ein passiver Sensor, zu dessen Funktion keine elektrische Hilfsenergie erforderlich ist. Wenn das Sensormodul 1 in seinem Ruhezustand bewegt wird und ein Bewegungs-/Eingangssignal 10 anliegt, erzeugt der Sekundärwandler 9 eine elektrische Spannung, die in dem Schwellwertschalter 13 in ein Interuptsignal für den Mikrocontroller 12 umgeformt wird. Daraufhin weckt der Mikrocontroller 12 den Primärwandler 8 sowie weitere Komponenten der elektronischen Schaltung 18 auf. Der Aufweckvorgang in dem dargestellten Sensormodul 1 nimmt beispielsweise eine Zeit von 6 ms in Anspruch. In anderen, nicht dargestellten erfindungsgemäßen Sensormodulen mit anderen Komponenten kann die Aufweckzeit auch länger oder kürzer sein.

Figur 2 zeigt schematisch eine Sensoreinheit 7, die zum Einsatz in einem erfindungsgemäßen Sensormodul 1 vorgesehen ist. Die dargestellte Sensoreinheit 7 besteht hier aus kristallinem Silizium. Sie ist in einer Draufsicht auf die Siliziumoberfläche dargestellt. Aus dieser Perspektive ist eine bewegbare Struktur 2 zu erkennen, die von Ätzgräben 3 begrenzt ist. Die bewegbare Struktur 2 ist in diesem Ausführungsbeispiel eine seismische Masse, die an vier Federbändern 4 aufgehängt ist und aus der dargestellten Ebene heraus bewegbar ist. Die bewegbare Struktur 2 ist mit einer nicht dargestellten Metallbeschichtung versehen, die mit einer ebenfalls nicht dargestellten zweiten feststehenden Elektrode eine Kapazität ausbildet. Die Größe der Kapazität dient als Messgröße des Primärwandlers 8, der aus der bewegbaren Struktur 2 und der Kapazität gebildet wird.

Auf den Federn 4 der bewegbaren Struktur 2 sind passive Sekundärwandler 9 angeordnet, die in dem dargestellten Ausführungsbeispiel piezoelektrische Schichten sind. In diesem Ausführungsbeispiel bilden die passiven Sekundärwandler 9 in Kombination mit den Federn 4 als bewegbare Strukturen 2 einen Sekundärwandler 9 aus, der bei Auslenkung der bewegbaren Strukturen 2 aus der Darstellungsebene heraus eine Spannung generiert, die von der hier nicht dargestellten elektronischen Schaltung 18 erfasst wird und die zum Aufwecken der elektronischen Schaltung 18 aus einem Ruhezustand in einen Messzustand verwendet wird.

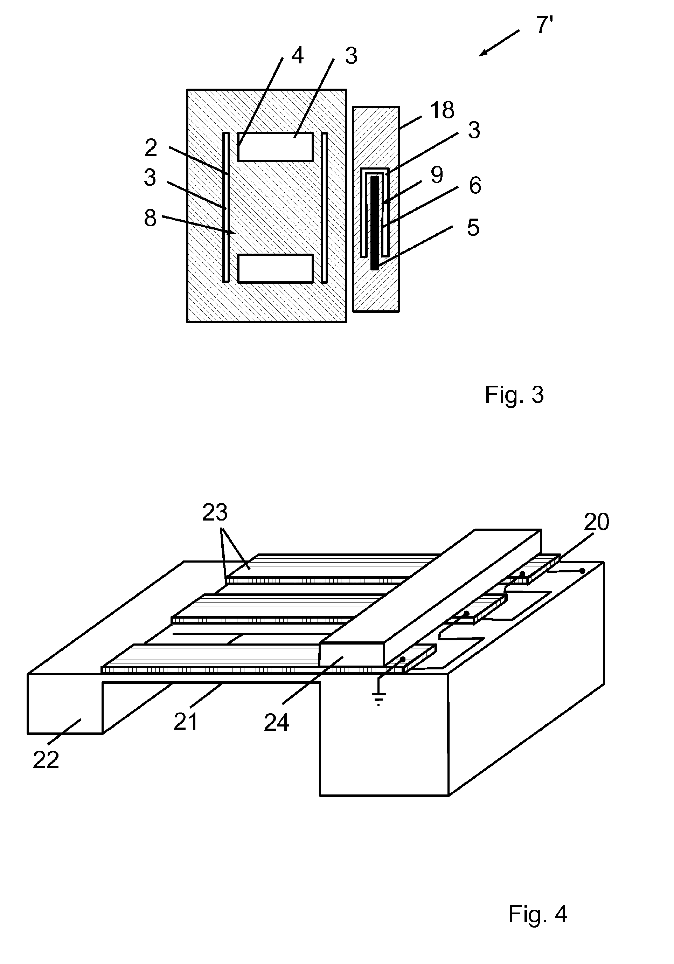

Figur 3 zeigt schematisch eine alternativ ausgebildete Sensoreinheit 7' eines erfindungsgemäßen Sensormoduls 1, bei der Komponenten mit gleicher Funktion wie in Figur 2 mit gleichen Bezugszeichen versehen sind. Anders als in der bereits beschriebenen Sensoreinheit 7 weist die Sensoreinheit 7' eine weitere bewegbare Struktur 6 auf, die nicht mit der bewegbaren Struktur 2 des Primärwandlers zusammenhängt. Die weitere bewegbare Struktur 6 dient in diesem Fall der Aufnahme des Sekundärwandlers 9 und ist in einer Verdrahtungsebene der elektronischen Schaltung 18 integriert. Der Sekundärwandler 9 weckt bei seiner Aktivierung zunächst die elektronische Schaltung 18 auf. Da die elektronische Schaltung 18 mit dem Primärwandler 8 verbunden ist, wird dieser daraufhin durch die elektronische Schaltung 18 aktiviert und misst. Die Sensoreinheit 7' benötigt zur Ausbildung der weiteren bewegbaren Struktur 6 mehr Platz als die Sensoreinheit 7. In der Sensoreinheit 7 wird die verfügbare Fläche besser ausgenutzt.

Figur 4 zeigt schematisch eine Möglichkeit der Ausbildung eines Sekundärwandlers 9 zur Anwendung in einer Ausführungsform des erfindungsgemäßen Sensormoduls 1. In dem in Figur 4 dargestellten Ausführungsbeispiel ist der Sekundärwandler 9 in Form von mehreren piezoelektrischen Unimorph-Biegebalken, das heißt einseitig eingespannten Biegebalken, ausgebildet. Die piezoelektrischen Biegebalken weisen wenigstens eine piezoelektrische Schicht 20 auf, die auf einem Substrat 21 ausgebildet ist. Bei Einwirken eines äußeren mechanischen Ereignisses auf die piezoelektrische Schicht 20 wird diese verwölbt. Verstärkt wird dieser Effekt in der in Figur 4 gezeigten Anordnung durch eine seismische Masse 22, durch die bei Einwirken eines mechanischen Ereignisses eine größere Kraft auf die piezoelektrische Schicht 20 und damit eine größere Auslenkung erzeugt wird. Durch den piezoelektrischen Effekt wird an den auf der piezoelektrischen Schicht 20 vorgesehenen Elektroden 23 eine Ladung messbar, die für das Aufwecken eines in Figur 4 nicht gezeigten angeschlossenen Primärwandlers 8 genutzt werden kann.

Die Anordnung von Figur 4 weist eine einseitige Einspannung 24 für die piezoelektrischen Biegebalken auf. In anderen, nicht gezeigten Ausführungsformen der vorliegenden Erfindung kann eine solche Einspannung 24 bzw. ein entsprechender Rahmen auch weggelassen werden, sodass die Biegebalken als drehbar gelagert zu betrachten sind.

## Patentansprüche

1. Mikromechanik-basiertes Sensormodul (1) mit wenigstens einer bewegbaren Struktur (2), wenigstens einem aktiven Primärwandler (8) zum Umwandeln eines mechanischen Signals der bewegbaren Struktur (2) in ein elektrisches Signal und einer elektronischen Schaltung (18) zum messtechnischen Erfassen von Bewegungen der bewegbaren Struktur (2), wobei das Sensormodul (1) neben dem aktiven Primärwandler (8), der für die Erfüllung seiner Messaufgabe mit Hilfsenergie versorgt werden muss, wenigstens einen Sekundärwandler (9) zum Umwandeln eines mechanischen Signals der bewegbaren Struktur (2) in ein elektrisches Signal aufweist, wobei der Primärwandler (8) und der Sekundärwandler (9) mit der elektronischen Schaltung (18) gekoppelt sind, und wobei der Sekundärwandler (9) als Aufweckgenerator für den Primärwandler (8) und/oder die elektronische Schaltung (18) von einem Ruhezustand in einen Messzustand vorgesehen ist,
**dadurch gekennzeichnet,**
**dass** der Sekundärwandler (9) in die bewegbare Struktur (2) integriert ist, wobei der Sekundärwandler (9) ein passiver Signalwandler ist, der ohne elektrische Energieversorgung selbstständig ein Signal erzeugen kann,
und/oder
das Sensormodul (1), das eine Sensoreinheit (7), welche den Primärwandler (8) und den Sekundärwandler (9) aufweist, und die elektronische Schaltung (18) aufweist, als integrierter Chip ausgebildet ist und der Sekundärwandler (9) in eine weitere bewegbare Struktur (6) in der elektronischen Schaltung (18) integriert ist, wobei die weitere bewegbare Struktur (6) in einer Verdrahtungsebene der integrierten elektronischen Schaltung (18) ausgebildet ist,
wobei der integrierte Sekundärwandler (9) ein passiver Signalwandler ist, der ohne elektrische Energieversorgung selbstständig ein Signal erzeugen kann.

2. Sensormodul nach Anspruch 1, **dadurch gekennzeichnet, dass** der Primärwandler (8) ein kapazitiver oder ein piezoresistiver Wandler ist.

3. Sensormodul nach Anspruch 1 oder 2, **dadurch gekennzeichnet, dass** der Sekundärwandler (9) ein piezoelektrischer Wandler ist.

4. Sensormodul nach Anspruch 1 oder 2, **dadurch gekennzeichnet, dass** der Sekundärwandler (9) ein induktiver Wandler oder ein auf einem Elektret basierender elektromechanischer Wandler ist.

5. Sensormodul nach Anspruch 1 oder 2, **dadurch gekennzeichnet, dass** der Sekundärwandler (9) einen piezoelektrisch gesteuerten Feldeffekttransistor aufweist.

6. Sensormodul nach wenigstens einem der vorhergehenden Ansprüche, **dadurch gekennzeichnet, dass** die bewegbare Struktur (2, 6) wenigstens eine an wenigstens einer Feder (4) aufgehängte seismische Masse umfasst und der wenigstens eine Sekundärwandler (9) an wenigstens einer der Federn (4) angeordnet ist.

7. Sensormodul nach wenigstens einem der vorhergehenden Ansprüche, **dadurch gekennzeichnet, dass** wenigstens eine der bewegbaren Strukturen (2, 6) eine Mikrostruktur mit luftisolierten elektrischen Leitungen ist.

8. Sensormodul nach wenigstens einem der vorhergehenden Ansprüche, **dadurch gekennzeichnet, dass** das Sensormodul (1) mehrere Teilsensoren für jeweils unterschiedliche Freiheitsgrade aufweist, wobei das Sensormodul (1) mehrere Sekundärwandler (9) aufweist, die den unterschiedlichen Freiheitsgraden zugeordnet sind.

9. Sensormodul nach wenigstens einem der vorhergehenden Ansprüche, **dadurch gekennzeichnet, dass** das Sensormodul (1) ein Inertialsensormodul oder ein Drucksensormodul ist.

10. Sensormodul nach wenigstens einem der vorhergehenden Ansprüche, **dadurch gekennzeichnet, dass** die elektronische Schaltung (18) einen Schwellwertschalter (13) und einen Mikrocontroller (12) aufweist, wobei der Leistungsbedarf des Mikrocontrollers (12) in dem Messzustand des Primärwandlers (8) und/oder der elektronischen Schaltung (18) mehrfach größer als in dem Ruhezustand ist, wobei der Schwellwertschalter (13) in dem Ruhezustand zur Überwachung eines Ausgangssignals des Sekundärwandlers (9) vorgesehen ist und wobei der Schwellwertschalter (13) zum Aufwecken des Mikrocontrollers (12) aus dem Ruhezustand per Interruptsignal vorgesehen ist.

11. Sensormodul nach wenigstens einem der vorhergehenden Ansprüche, **dadurch gekennzeichnet, dass** die elektronische Schaltung (18) wenigstens eine Schaltungskomponente aufweist, durch welche in dem Sekundärwandler (9) erzeugte Elektroenergie zumindest zeitweise als Energieversorgungskomponente des Sensormoduls (1) nutzbar ist.

## Claims

1. Micromechanics-based sensor module (1) with at least one movable structure (2), at least one active primary transducer (8) for transforming a mechanical signal of the movable structure (2) into an electric signal and an electronic circuit (18) for measured data acquisition of movements of the movable structure (2), wherein the sensor module (1) comprises besides the active primary transducer (8), which has to be supplied with auxiliary energy for completing its measuring task, at least one secondary transducer (9) for transforming a mechanical signal of the movable structure (2) into an electric signal, wherein the primary transducer (8) and the secondary transducer (9) are coupled with the electronic circuit (18), and wherein the secondary transducer (9) is provided as waking generator for the primary transducer (8) and/or the electronic circuit (18) from a resting state to a measuring state is provided,
**characterized in that**
the secondary transducer (9) is integrated in the movable structure (2), wherein the secondary transducer (9) is a passive signal transducer, which can autonomously produce a signal without electric energy,
and/or
the sensor module (1) comprises a sensor unit (7), which comprises the primary transducer (8) and the secondary transducer (9), and then electronic circuit (18), is formed as integrated chip and the secondary transducer (9) is integrated in a further movable structure (6) in the electronic circuit (18), wherein the further movable structure (6) is provided in a wiring level of the integrated electronic circuit (18),
wherein the integrated secondary transducer (9) is a passive signal transducer, which can autonomously produce a signal without electric energy.

2. Sensor module according to claim 1, **characterized in that** the primary transducer (8) is a capacitive or a piezoresistive transducer.

3. Sensor module according to claim 1 or 2, **characterized in that** the secondary transducer (9) is a piezoelectric transducer.

4. Sensor module according to claim 1 or 2, **characterized in that** the secondary transducer (9) is an inductive transducer or an electromechanical transducer based on an electret.

5. Sensor module according to claim 1 or 2, **characterized in that** the secondary transducer (9) comprises a piezoelectric-controlled field-effect transistor.

6. Sensor module according to at least one of the preceding claims, **characterized in that** the movable structure (2, 6) comprises at least one seismic mass fixed to at least one spring (4) and the at least one secondary transducer (9) is fixed to at least one of the springs (4).

7. Sensor module according to at least one of the preceding claims, **characterized in that** at least one of the movable structures (2, 6) is a microstructure with air-insulated electric lines.

8. Sensor module according to at least one of the preceding claims, **characterized in that** the sensor module (1) comprises several part sensors for different degrees of freedom, respectively, wherein the sensor module (1) comprises several secondary transducers (9), which are correlated to the different degrees of freedom.

9. Sensor module according to at least one of the preceding claims, **characterized in that** the sensor module (1) is an inertial sensor module or a pressure sensor module.

10. Sensor module according to at least one of the preceding claims, **characterized in that** the electronic circuit (18) comprises a threshold switch (13) and a micro controller (12), wherein the energy demand of the micro controller (12) is several times larger in the measuring state of the primary transducer (8) and/or the electronic circuit (18) than in the resting state, wherein the threshold switch (13) in the resting state is provided for controlling an output signal of the secondary transducer (9) and wherein the threshold switch (13) is provided for waking the micro controller (12) from the resting state by an interrupt signal.

11. Sensor module according to at least one of the preceding claims, **characterized in that** the electronic circuit (18) comprises at least one circuit component by which electrical energy, being produced in the secondary transducer (9), is at least temporarily usable as energy supply component of the sensor module (1).

## Revendications

1. Module de capteur (1) à base de micromécanique, avec au moins une structure (2) mobile, au moins un convertisseur primaire (8) actif pour la conversion d'un signal mécanique de la structure (2) mobile en un signal électrique et avec un circuit électronique (18) pour la détection, par des techniques de mesure, de mouvements de la structure (2) mobile, dans lequel le module de capteur (1) présente, outre le convertisseur primaire (8) actif qui doit être alimenté en énergie auxiliaire pour effectuer sa tâche de mesure, au moins un convertisseur secondaire (9) pour la conversion d'un signal mécanique de la structure (2) mobile en un signal électrique, dans lequel le convertisseur primaire (8) et le convertisseur secondaire (9) sont couplés au circuit électronique (18), et dans lequel le convertisseur secondaire (9) est prévu en tant que générateur de réveil pour le convertisseur primaire (8) et/ou le circuit électronique (18) pour faire passer celui-ci/ceux-ci d'un état de repos à un état de mesure,
**caractérisé en ce que**
le convertisseur secondaire (9) est intégré dans la structure (2) mobile, dans lequel le convertisseur secondaire (9) est un convertisseur de signaux passif qui peut produire un signal de façon autonome sans alimentation en énergie électrique,
et/ou
le module de capteur (1), qui présente une unité de capteur (7) qui présente le convertisseur primaire (8) et le convertisseur secondaire (9), et qui présente le circuit électronique (18) est constitué en tant que puce intégrée, et le convertisseur secondaire (9) est intégré dans une autre structure (6) mobile dans le circuit électronique (18), dans lequel l'autre structure (6) mobile est constituée dans un niveau de câblage du circuit électronique (18) intégré,
dans lequel le convertisseur secondaire (9) intégré est un convertisseur de signaux passif qui peut produire un signal de façon autonome sans alimentation en énergie électrique.

2. Module de capteur selon la revendication 1, **caractérisé en ce que** le convertisseur primaire (8) est un convertisseur capacitif ou un convertisseur piézorésistif.

3. Module de capteur selon la revendication 1 ou 2, **caractérisé en ce que** le convertisseur secondaire (9) est un convertisseur piézoélectrique.

4. Module de capteur selon la revendication 1 ou 2, **caractérisé en ce que** le convertisseur secondaire (9) est un convertisseur inductif ou un convertisseur électromécanique basé sur un électret.

5. Module de capteur selon la revendication 1 ou 2, **caractérisé en ce que** le convertisseur secondaire (9) présente un transistor à effet de champ à commande piézoélectrique.

6. Module de capteur selon au moins l'une des revendications précédentes, **caractérisé en ce que** la structure (2, 6) mobile comprend au moins une masse sismique suspendue à au moins un ressort, et le convertisseur secondaire (9) au moins au nombre de un est disposé sur au moins un des ressorts (4).

7. Module de capteur selon au moins l'une des revendications précédentes, **caractérisé en ce qu**'au moins une des structures (2, 6) mobiles est une microstructure avec des lignes électriques isolées par air.

8. Module de capteur selon au moins l'une des revendications précédentes, **caractérisé en ce que** le module de capteur (1) présente plusieurs capteurs partiels pour des degrés de liberté respectivement différents, dans lequel le module de capteur (1) présente plusieurs convertisseurs secondaires (9) qui sont affectés aux différents degrés de liberté.

9. Module de capteur selon au moins l'une des revendications précédentes, **caractérisé en ce que** le module de capteur (1) est un module de capteur inertiel ou un module de capteur de pression.

10. Module de capteur selon au moins l'une des revendications précédentes, **caractérisé en ce que** le circuit électronique (18) présente un commutateur de valeur seuil (13) et un microcontrôleur (12), dans lequel le besoin de puissance du microcontrôleur (12) est, dans l'état de mesure du convertisseur primaire (8) et/ou du circuit électronique (18), plusieurs fois plus grand que dans l'état de repos, dans lequel le commutateur de valeur seuil (13) est, dans l'état de repos, prévu pour la surveillance d'un signal de sortie du convertisseur secondaire (9), et dans lequel le commutateur de valeur seuil (13) est prévu pour réveiller le microcontrôleur (12) et le faire sortir de l'état de repos par un signal d'interruption.

11. Module de capteur selon au moins l'une des revendications précédentes, **caractérisé en ce que** le circuit électronique (18) présente au moins un composant de circuit par lequel l'énergie électrique produite dans le convertisseur secondaire (9) est utilisable, au mois par intermittence, en tant que composante d'alimentation en énergie du module de capteur (1).
